# EUROPÄISCHE PATENTSCHRIFT

(11) **EP 0 471 249 B1**
(45) Veröffentlichungstag und Bekanntmachung des Hinweises auf die Patenterteilung: **09.11.1994**
(21) Anmeldenummer: 91113012.8
(22) Anmeldetag: 02.08.1991
(51) Int. Cl.: F16B 37/10

(54) **Schnellmontagemutter**
Quick-mounting nut
Ecrou à assemblage rapide

(30) Priorität: 04.08.1990 DE 4024784
(43) Veröffentlichungstag der Anmeldung: 19.02.1992
(73) Patentinhaber: WÖRNDLE, Anton, D-82362 Weilheim (DE); WÖRNDLE, Florian, D-82362 Weilheim (DE)
(72) Erfinder: Wörndle, Anton, Verstorben (DE)
(74) Vertreter: Flosdorff, Jürgen, Dr.

(56) Entgegenhaltungen:
- DE-A- 2 061 408
- FR-A- 1 382 310
- FR-A- 2 640 336
- US-A- 2 789 458

## Beschreibung

Die Erfindung betrifft eine als Schnellmontagemutter dienende Schraubenmutteranordnung mit einem einstückigen Außenglied und einer aus wenigstens zwei Innenmuttersegmenten bestehenden Innenmuttereinrichtung gemäß dem Oberbegriff des Patentanspruchs 1.

Wenn Bauteile sehr oft an- und abgeschraubt werden müssen, sind die hiermit verbundenen Schraubvorgänge sehr zeitaufwendig, wenn herkömmliche Schraubenmuttern auf entsprechenden Schraubenbolzen in die Anzugsposition gebracht und später wieder entlang des gesamten Gewindes von der Schraube gelöst werden müssen. Der hiermit verbundene Zeitaufwand wird häufig dadurch noch beträchtlich erhöht, daß das Außengewinde der Schraubenbolzen eine beträchtliche Länge hat, wobei zusätzliche Schwierigkeiten dann entstehen, wenn nur ein begrenzter Raum zur Handhabung eines Schraubenschlüssels zur Verfügung steht. Wenn zudem das Gewinde der Schraube oder der Gewindestange beschädigt oder verrostet ist, bereitet der Schraubvorgang zusätzliche Schwierigkeiten. Es besteht daher ein erheblicher Bedarf an einer Schnellmontagemutter, mit der die Montagezeiten von Schraubverbindungen erheblich verringert werden können.

Es sind bereits verschiedene Schraubenmutteranordnungen der eingangs genannten Art vorgeschlagen worden, bei denen mittels des einstückigen Außengliedes die Innenmuttersegmente so zusammengeführt werden können, daß sie insgesamt die Form einer einstückigen Innenmutter mit einem zylindrischen Innengewinde annehmen, womit sich die Schraubenmutteranordnung in einem schraubfähigen Zustand befindet. Durch wenigstens teilweises Lösen des Außengliedes von den Innenmuttersegmenten geraten die letzteren z.B. durch Federkraft in einen voneinander beabstandeten Zustand, wodurch der Innengewindeabschnitt aufgeweitet wird, so daß die Schraubenmutteranordnung in diesem Zustand beispielsweise von einer Gewindestange ohne Gewindeeingriff abgezogen werden kann.

Allen vorbekannten Schraubenmutteranordnungen der betrachteten Art ist gemeinsam, daß sie -sofern sie überhaupt funktionsfähig sind- einen komplizierten Aufbau haben, der ihre Nutzungsdauer beschränkt und beträchtliche Herstellungskosten bedingt.

Aus der DE-A 2 061 408 ist eine Schraubenmutteranordnung bekannt, die eine einstückige Außenmutter mit einem konischen Innengewinde hat, in das eine aus mehreren Segmenten bestehende Innenmutter mit einem entsprechenden konischen Außengewinde eingreift. Zwischen den Innenmuttersegmenten sind in Umfangsrichtung wirkende Druckfedern angeordnet, die die Innenmuttersegmente voneinander beabstanden, wenn diese nur teilweise in die Außenmutter eingeschraubt sind, wobei in diesem Zustand das insgesamt zylindrische Innengewinde der Innenmutter so aufgeweitet ist, daß die Schraubenmutteranordnung lose in die gewünschte Position, beispielsweise auf einer Gewindestange aufgeschoben werden kann.

Aus der FR-A 1 382 310 ist eine Schraubenmutteranordnung gemäß dem Oberbegriff des Patentanspruchs 1 bekannt. Bei dieser vorbekannten Schraubenmutteranordnung wird das von den zwei Innenmuttersegmenten gebildete zylindrische Innengewinde dadurch aufgeklappt, daß das Außenglied von Hand in eine rückwärtige Position geschoben wird. Der Bewegungsbereich des Außengliedes wird dabei durch radial nach außen weisende, umgebogene Anschläge an den beiden Innenmuttersegmenten begrenzt, damit sich das Außenglied nicht von den beiden Innenmuttersegmenten trennen kann. Die nach außen überstehende Anschläge können hierbei erst nach dem Zusammenbau der Schraubenmutteranordnung ausgebildet werden, da anderenfalls die Innenmuttersegmente nicht mit dem Außenglied zusammengesetzt werden können, weil das Außenglied nicht über die beiden bereits mit nach außen vorspringenden Anschlägen versehenen Innenmuttersegmente geschoben werden könnte.

Die erfindungsgemäße Schraubenmutteranordnung ist dadurch gekennzeichnet, daß eine Federeinrichtung die rückwärtigen Abschnitte der Innenmuttersegmente radial nach innen, d.h. aufeinander zu beaufschlagt, wobei die Federeinrichtung derart radial nach außen übersteht, daß die Innenmuttersegmente unverlierbar in dem Außenglied gehalten sind.

Diese Ausbildung hat zur Folge, daß die Aufklappbewegung der Schraubenmutteraordnung sehr viel schneller und leichter vonstatten geht, da sie automatisch durch die Federeinrichtung bewirkt wird, nachdem das Außenglied von Hand ein kleines Stück zurückgeschoben wurde. Da außerdem die Federeinrichtung derart radial nach außen übersteht, daß die Innenmuttersegmente unverlierbar in dem Außenglied gehalten sind, übernimmt die Federeinrichtung zusätzlich die Funktion eines Anschlags für das Außenglied, so daß die Notwendigkeit entfällt, hierzu eine besondere bauliche Maßnahme zu treffen.

Die drehfeste Verbindung des Außengliedes mit den Innenmuttersegmenten ist in einer bevorzugten Ausgestaltung der Erfindung dadurch bewerkstelligt, daß das Außenglied eine Mehrkant-Innenkontur hat, die zweckmäßigerweise ein Innensechskant ist, wenn das Außenglied eine Sechskant-Außenkontur aufweist.

Die drehfeste Verbindung kann jedoch grundsätzlich auch durch andere Mittel hervorgerufen werden, beispielsweise durch in Nuten eines der beiden Bauteile eintretende Vorsprünge des jeweils anderen Bauteils bei beispielsweise kreisrunden Innen- und Außenkonturen des Außengliedes und der Innenmuttersegmente. Das Außenglied kann auch eine kreisrunde Außenkontur z.B. mit einer Riffelung aufweisen, um mit einem anderen Werkzeug als einem herkömmlichen Schraubenschlüssel betätigbar zu sein.

Der an den Vorderabschnitt der Innenmuttersegmente einstückig anschließende rückwärtige Abschnitt ist jeweils so geformt, daß bei vorgeschobenem Außenglied die einander gegenüberliegenden Seitenkanten der Innenmuttersegmente voneinander beabstandet sind, und zwar vorzugsweise mit einem keilförmig sich zu dem rückwärtigen Endabschnitt verbreiterndenAbschnitt, derart,daß beim Zurückschieben des Außengliedes sich die Innenmuttersegmente verschwenken und die Seitenkanten des rückwärtigen Abschnitts aufeinander zu bewegen, wodurch der Vorderabschnitt der Innenmuttereinrichtung "aufgeklappt" wird und sich das Innengewinde entsprechend aufweitet. In diesem Zustand ist die erfindungsgemäße Schraubenmutteranordnung auf einem Außengewinde entsprechender Größe ohne Gewindeeingriff frei bewegbar, da ein Innenraum vorzugsweise zylindrischer Form in den rückwärtigen Abschnitten der Innenmuttersegmente verbleibt, dessen Durchmesser zumindest etwas größer als derjenige des Außengewindes ist. Statt eines zylindrischen Hohlraumes kann dieser auch eine andere Querschnittsform haben, wenn die lichte Weite stets diejenige des Außengewindes übersteigt.

Wenn die Innenmuttereinrichtung aus zwei Innenmuttersegmenten besteht, ist auf besonders einfache Weise zu gewährleisten, daß diese Innenmuttersegmente stets in einer funktionsfähigen Zuordnung zueinander verbleiben. Im Rahmen der Erfindung liegt es jedoch auch, drei oder mehr Innenmuttersegmente anzuordnen.

Zweckmäßigerweise haben die Innenkontur des Außengliedes und die entsprechende Außenkontur der Innenmuttersegmente einen vordersten Bereich mit in axialer Richtung konstanten Innenabmessungen, an den sich der vorzugsweise konische Bereich anschließt. Da sich der vorderste Bereich in radialer Richtung nicht verbreitert, ist das Außenglied in der vorgeschobenen Position in axialer Richtung durch die auftretenden Reibungskräfte so lange fest und sicher gehalten, wie keine äußeren Kräfte in Freigaberichtung, z.B. durch Schlageinwirkung auf die vordere Stirnfläche des Außengliedes, ausgeübt werden.

Der keilförmige Zwischenraum zwischen den Seitenkanten des rückwärtigen Abschnitts der Innenmuttersegmente in schraubfähigen Zustand der Schraubenmutteranordnung beginnt im wesentlichen an der rückwärtigen Fläche des in der vorgeschobenen Position befindlichen Außengliedes. Wenn das Außenglied zurückgeschoben wird und dabei der Vorderabschnitt der Innenmuttereinrichtung "aufklappt", öffnen sich entsprechende keilförmige Zwischenräume zwischen den vorderen Seitenkanten der Innenmuttersegmente.

Vorteilhafterweise sollte sich die Außenkontur des rückwärtigen Abschnitts der Innenmuttersegmente bei vorgeschobenem Außenglied von dessen rückwärtiger Stirnfläche an radial verbreitern, derart, daß das Außenglied auf diese Außenflächen aufläuft, sobald es zurückgeschoben wird, um das vordere Innengewinde "aufzuklappen".

Dies hat denVorteil, daß ein unbeabsichtigtes Abziehen des Außengliedes unmöglich ist, da die Innenmuttersegmente solange die zum "Aufklappen" erforderliche Kippbewegung nicht ausführen können, wie sie am Werkstück anliegen. Die Steckmutteranordnung muß demnach bei dieser vorteilhaften Ausgestaltung erst ein wenig von demWerkstück zurückgeschraubt werden, bevor das Außenglied zurückgeschoben werden kann.

Gemäß der Erfindung wird die Aufklappbewegung durch eine Federeinrichtung bewirkt, die die rückwärtigen Abschnitte der Innenmuttersegmente radial nach innen, d.h. aufeinander zu beaufschlagt. Diese Federeinrichtung kann in Form einer ringförmigenZugfeder in einer äußere Ringnut sitzen, die im rückwärtigen Endabschnitt der Innenmuttersegmente ausgebildet ist. Es kommt jede geeignete Federeinrichtung in Betracht, die auch auf andere Weise zwischen den rückwärtigen Abschnitten der Innenmuttersegmente wirken kann.

Erfindungsgemäß wird vorgeschlagen, daß die Außenabmessungen des rückwärtigen Endabschnitts der Innenmuttereinrichtung stets größer sind als die Innenabmessungen der zugeordneten Rückseite des Außengliedes, so daß die Innenmuttersegmente unverlierbar in dem Außenglied gehalten sind. Dieses Übermaß wird durch eine überstehende Ringfeder hervorgerufen.

Mit großem Vorteil wird ferner vorgeschlagen, daß die zugeordneten Seitenkanten der Innenmuttersegmente eine Verzahnung aufweisen, so daß die Innenmuttersegmente stets in axialer Richtung exakt zueinander positioniert bleiben. Hierzu kann sowohl im Bereich des vorderen als auch des rückwärtigen Abschnitts der Innenmuttersegmente jeweils ein vorzugsweise dreieckiger Zahn an einer Seitenkante angeformt sein, der in eine entsprechende Aussparung der gegenüberliegenden Randkante eingreift bzw. in diese einschwenkt. Die Verzahnung kann auch eine andere Form haben.

Auch die Schwenkpunkte der Innenmuttersegmente können durch den Eingriff seitlicher Vorsprünge der Randkanten eines Innenmuttersegments in entsprechende Aussparungen der zugeordneten Randkanten des anderen Innenmuttersegments gebildet sein, wobei die Vorsprünge zweckmäßigerweise eine gewölbte Form, beispielsweise die Form eines Halbkreises haben können. Dieser Eingriff dient nicht nur der Verschwenkbarkeit, sondern stellt eine zusätzliche Verzahnung zur Aufrechterhaltung der axialen Zu-ördnung der Innenmuttersegmente dar. Die Schwenkeinrichtung befindet sich in axialer Richtung an der rückwärtigen Stirnfläche des Außengliedes, wenn sich dieses in der vorgeschobenen Position befindet. Bei Rückschub des Außengliedes beginnt gleichzeitig das "Aufklappen" der Innenmuttersegmente um diese Schwenkpunkte.

Die Bestandteile der erfindungsgemäßen Schraubenmutteranordnung sind auf einfache Weise im Gußverfahren herstellbar, so daß ihre Herstellung mit geringen Kosten verbunden ist. Die Schraubenmutteranordnung besteht aus wenigen Bestandteilen, deren räumliche Zuordnung zueinander in allen Gebrauchszuständen der Schraubenmutteranordnung stets so aufrecht erhalten wird, daß die Schraubenmutteranordnung immer funktionsbereit ist. Da die Anordnung einen robusten Aufbau hat, ist eine lange Nutzungsdauer gewährleistet.

Weitere Merkmale, Vorteile und Einzelheiten der Erfindung ergeben sich aus der nachfolgenden Beschreibung einer bevorzugten Ausführungsform sowie anhand der Zeichnung. Dabei zeigen:
Fig. 1 die erfindungsgemäße Schraubenmutteranordnung im schraubfähigen Zustand in einer teilweise geschnittenen Seitenansicht;
Fig. 2 eine Aufsicht auf die rückwärtige Stirnfläche der Schraubenmutteranordnung gemäß Fig. 1;
Fig. 3 die Schraubenmutteranordnung im "aufgeklappten" Zustand in einer teilweise geschnittenen Seitenansicht und
Fig. 4 eine Aufsicht auf die rückwärtige Stirnseite der Schraubenmutteranordnung gemäß Fig. 3.

Die Figuren zeigen auf rein schematische Weise eine Ausführungsform der erfindungsgemäßen Schraubenmutteranordnung, die aus einem Außenglied 1, zwei Innenmuttersegmenten 2 und einer ringförmigen Zugfeder 3 zusammengesetzt ist.

Das Außenglied 1 hat eine Sechskant-Außenkontur 4 und eine Sechskant-Innenbohrung mit einem vordersten Bereich 5 mit in axialer Richtung konstanten Innenabmessungen sowie einem anschließenden konischen Innensechskant-Bereich 6, die sich in einer InnensechskantKante 7 treffen. Der konische Innensechskant-Bereich 6 endet in der rückwärtigen Kante 8.

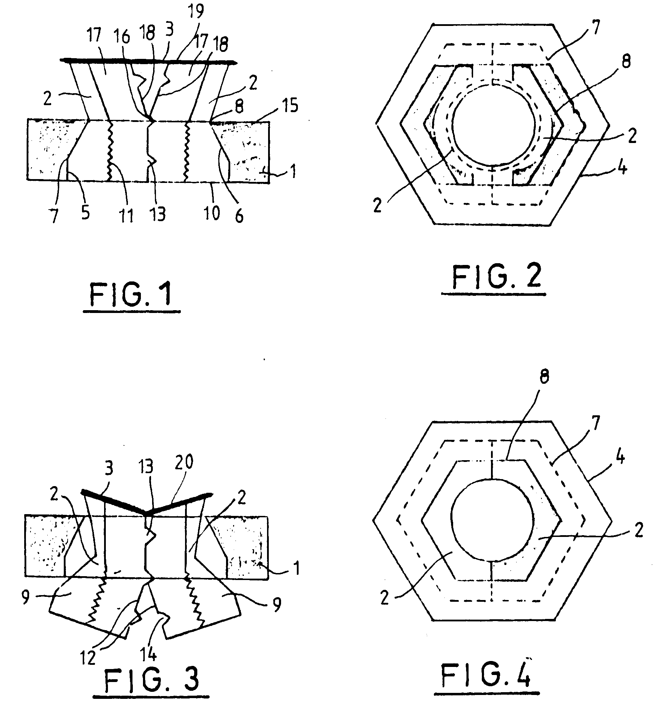

Die Innenmuttersegmente 2 haben einen Vorderabschnitt 9, der sich in Figur 1 von der vorderen Stirnfläche 10 der Schraubenmutteranordnung bis zu der rückwärtigen Kante 8 erstreckt, wobei der Vorderabschnitt der beiden Innenmuttersegmente insgesamt eine Außenkontur hat, die der Innenkontur des Außengliedes 1 entspricht. In der in Figur 1 dargestellten, schraubfähigen Anordnung enthalten die beiden Innenmuttersegmente 2 ein insgesamt zylindrisches Innengewinde 11, mit dem die Schraubenmutteranordnung auf ein in den Figuren nicht dargestelltes Außengewinde aufschraubbar ist.

In dem in Figur 1 dargestellten vorgeschobenen Zustand des Außengliedes 1 liegen die Randkanten 12 des Vorderabschnitts 9 der Innenmuttersegmente 2 aneinander an, wobei an dem in den Figuren linken Innenmuttersegment 2 diametral gegenüberliegend, d.h. um 180° voneinander beabstandete dreieckige Vorsprünge 13 angeformt sind, die jeweils in eine zugehörige Aussparung 14 der gegenüberliegenden Randkante 12 des anderen Innenmuttersegments eingreifen. Außerdem greift in Höhe der rückwärtigen Stirnfläche 15 des vorgeschobenen Außenglieds 1 jeweils ein halbkreisförmiger Vorsprung 16 in eine zugeordnete Aussparung ein, wobei die beiden diametral gegenüberliegenden Eingriffseinrichtungen 16 eine Schwenkachse der beiden Innenmuttersegmente 2 bilden.

Der rückwärtige Abschnitt 17 der Innenmuttersegmente 2 ist so geformt, daß in dem in Figur 1 dargestellten Zustand rwischen den Randkanten 18 ein sich keilförmig öffnender Zwischenraum verbleibt, der im Bereich der Schwenkpunkte seinen Anfang nimmt. Die Außenkontur der rückwärtigen Abschnitte 17 verbreitert sich in radialer Richtung zum rückwärtigen Ende hin und zwar von der mit dem Bezugszeichen 15 bezeichneten Ebene an.
In einer ringförmigen Nut 19, die in denFiguren lediglich angedeutet ist, sitzt eine Zugfeder 20, die bestrebt ist, dieSeitenkanten 18 aufeinander zu zu bewegen.

Wenn das Außenglied 1, dessen vordere Stirnfläche im schraubfähigen Zustand der Schraubenmutteranordnung mit der vorderen Stirnfläche der Innenmuttersegmente 2 übereinstimmt, nach Zurückschrauben der Anordnung vom Werkstück zurückgeschoben wird, werden die Innenmuttersegmente 2 durch die Kraft der Feder 20 in den in Figur 3 dargestellten Zustand verschwenkt, in dem der Vorderabschnitt 9 "aufklappt" und das Innengewinde 11 so aufgeweitet wird, daß es aus dem zugehörigen Außengewinde (nicht dargestellt) austritt. In diesem Zustand legen sich die rückwärtigen Seitenkanten 18 aneinander an, wobei wieder zwei dreieckige Zähne 13 in eine zugeordnete Aussparung eintreten, um die axiale Zuordnung der beiden Innenmuttersegmente 2 aufrecht zu erhalten.

Wenn in dem in Figur 3 dargestellten Zustand das Außenglied 1 wieder vorgeschoben wird, trifft die Randkante seiner Bohrung auf die schräge Außenkontur 6 der Innenmuttersegmente 2 auf, wodurch der Schwenkvorgang in den Zustand gemäß Figur 1 eingeleitet wird.

Aus Figur 3 ist zu ersehen, daß auch im "aufgeklappten" Zustand sich die radialen Außenabmessungen des rückwärtigen Endes der aus den beiden Innenmuttersegmenten 2 zusammengesetzten Innenmuttereinrichtung größer sind als die rückwärtige Öffnung des Außengliedes, und zwar infolge der Anordnung der Ringfeder 20, wodurch die Innenmuttersegmente 2 unverlierbar in dem Außenglied 1 gehalten sind.

Die Erfindung ist nicht auf die beschriebenen Ausführungsformen beschränkt. Beispielsweise kann sich die Mehrkant-Innenkontur des Außengliedes nur über einen Teil der axialen Länge des Außengliedes erstrecken, während der verbleibende Teil, beispielsweise derjenige sich mit verändernden Innenabmessungen, beispielsweise eine im Querschnitt kreisrunde Innenkontur haben kann. Die rückwärtigen Abschnitte der Innenmuttersegmente können im Querschnitt, d.h. in zur axialer Erstreckung senkrechten Ebenen, beispielsweise die Form von Kreisabschnitten und damit im aneinander anliegenden Zustand insgesamt die Form eines Kreisringes haben. Andere Querschnittsformen, beispielsweise eine Sechskant-Querschnittsform, liegen im Rahmen der Erfindung.

## Patentansprüche

1. Schraubenmutteranordnung mit einem einstückigen Außenglied (1) und einer aus wenigstens zwei Innenmuttersegmente bestehenden Innenmuttereinrichtung, wobei das Außenglied (1) eine Innenfläche (5, 6) aufweist, deren Innenabmessungen sich wenigstens über einen Teil (6) ihrer axialen Erstreckung in Anzugrichtung der Schraubenmutteranordnung verbreitert, die Innenmuttereinrichtung eine größere axiale Länge als das Außenglied (1) aufweist, mit einem in Anzugrichtung vorderen Abschnitt (9), in dem die Innenmuttersegmente (2) in einem mit ihren Seitenkanten (12) aneinander liegenden Zustand ein zylindrisches Innengewinde (11) und eine der Innenkoptur des Außengewindes (1) entsprechende Außenkontur aufweisen, so daß das Außenglied (1) im wesentlichen formschlüssig auf den Vorderabschnitt (9) der Innenmuttersegmente (2) vorschiebbar und durch ineinandergreifende Mittel drehfest mit diesen verbindbar ist, und wobei bei vorgeschobenem Außenglied (1) die Seitenkanten (18) des rückwärtigen Abschnitts der Segmente (2) beabstandet sind, derart, daß beim Zurückschieben des Außengliedes (1) sich die Innenmuttersegmente (2) verschwenken und ihre Seitenkanten (18) aufeinander zu bewegen, wodurch das Innengewinde (11) aufgeweitet ist,
**dadurch gekennzeichnet**,
daß eine Federeinrichtung (20) die rückwärtigen Abschnitte (17) der Innenmuttersegmente (2) radial nach innen, d.h. aufeinander zu beaufschlägt, wobei die Federeinrichtung (20) derart radial nach außen übersteht, daß die Innenmuttersegmente (2) unverlierbar in dem Außenglied (1) gehalten sind.

2. Schraubenmutteranordnung nach Anspruch 1,
dadurch gekennzeichnet, daß das Außenglied (1) eine Mehrkant-, vorzugsweise Sechskant-Innenkontur (5, 6) hat.

3. Schraubenmutteranordnung nach Anspruch 1 oder 2,
dadurch gekennzeichnet, daß das Außenglied (1) eine Mehrkant-, vorzugsweise Sechskant-Außenkontur (4) hat.

4. Schraubenmutteranordnung nach einem der Ansprüche 1 bis 3, dadurch gekennzeichnet, daß der Vorderabschnitt (9) der Innenmuttereinrichtung im Längsschnitt einen vordersten Bereich (5) mit konstanten Innenabmessungen aufweist.

5. Schraubenmutteranordnung nach Anspruch 4,
dadurch gekennzeichnet, daß sich an den zylindrischen Bereich (5) axial ein konischer Bereich (6) anschließt.

6. Schraubenmutteranordnung nach einem der Ansprüche 1 bis 5, dadurch gekennzeichnet, daß die Seitenkanten (18) des rückwärtigen Abschnitts (17) der Innenmuttersegmente (2) bei vorgeschobenem Außenglied (1) keilförmig voneinander beabstandet sind.

7. Schraubenmutteranordnung nach einem der Ansprüche 1 bis 6, dadurch gekennzeichnet, daß sich die Außenkontur des rückwärtigen Abschnitts (17) der Innenmuttersegmente (2) bei vorgeschobenem Außenglied (2) von dessen rückwärtiger Stirnfläche an radial verbreitert.

8. Schraubenmutteranordnung nach einem der Ansprüche 1 bis 7, dadurch gekennzeichnet, daß bei zurückgeschobenem Außenglied (1) die rückwärtigen Seitenkanten (18) der Innenmuttersegmente (2) über ihre gesamte Länge aneinander anliegen.

9. Schraubenmutteranordnung nach einem der Ansprüche 1 bis 8, dadurch gekennzeichnet, daß im rückwärtigen Endabschnitt der Innenmuttersegmente (2) eine äußere Ringnut (19) ausgebildet ist, in der eine ringförmige Zugfedereinrichtung (20) sitzt.

10. Schraubenmutteranordnung nach einem der Ansprüche 1 bis 9, dadurch gekennzeichnet, daß die zugeordneten Seitenkanten (12, 18) der Innenmuttersegmente (2) eine Verzahnung (13, 14, 16) aufweisen.

11. Schraubenmutteranordnung nach einem der Ansprüche 1 bis 10, dadurch gekennzeichnet, daß die Innenmuttersegmente (2) um eine Schwenkeinrichtung (16) verschwenkbar sind, die durch Eingriff von seitlichen Vorsprüngen (16) an Randkanten in entsprechende Aussparungen der zugeordneten Randkanten ausgebildet ist.

12. Schraubenmutteranordnung nach Anspruch 11, dadurch gekennzeichnet, daß sich die Schwenkeinrichtung (16) in axialer Richtung an der rückwärtigen Stirnfläche (15) des vorgeschobenen Außenglieds befindet.

13. Schraubenmutteranordnung nach einem der Ansprüche 1 bis 12, dadurch gekennzeichnet, daß die axiale Länge der Innenmuttereinrichtung etwa doppelt so groß ist wie diejenige des Außengliedes (1).

14. Schraubenmutteranordnung nach einem der Ansprüche 1 bis 13, dadurch gekennzeichnet, daß sie im Gußverfahren herstellbar ist.

15. Schraubenmutteranordnung nach einem der Ansprüche 1 bis 14, dadurch gekennzeichnet, daß im aufgeklappten Zustand der Anordnung ein zylindrischer Innenraum in den rückwärtigen Abschnitten (17) der Innenmuttersegmente (2) verbleibt, dessen Durchmesser soviel größer als derjenige des Innengewindes der Vorderabschnitte (9) ist, daß die Schraubenmutteranordnung frei beweglich auf einem zugehörigen Außengewinde sitzt.

## Claims

1. A screw nut assembly comprising an integral external member (1) and an inner nut means consisting of at least two inner nut segments, said external member (1) having an inner surface (5, 6) whose inner dimensions broaden at least over a portion (6) of their axial extension in the tightening direction of said screw nut assembly, said inner nut means having a greater axial length than said external member (1), further comprising a section (9) which is the front one in tightening direction and in which said inner nut segments (2) have a cylindrical internal thread (11) in a state where the side edges (12) of said segments abut on each other, and have an outer contour corresponding to the inner contour of said external thread (1), so that said external member (1) can be pushed forwards in a substantially positive manner onto the front section (9) of said inner nut segments (2) and is connectable by intermeshing means in an antirotational manner thereto, and the side edges (18) of the rear section of said segments (2) being spaced apart in the forwardly pushed state of said external member (1) in such a manner that, when said external member (1) is pushed back, said inner nut segments (2) pivot and the side edges (18) thereof move towards each other, whereby said internal thread (11) is expanded, **characterized in**
tht a spring means (20) acts on the rear sections (17) of said inner nut segments (2) radially inwards, i.e., towards each other, with said spring means (20) projecting radially outwards in such a manner that the inner nut segments (2) are captively held in said external member (1).

2. A screw nut assembly according to claim 1, characterized in that said external member (1) has a polygonal, preferably hexagonal inner contour (5, 6).

3. A screw nut assembly according to claim 1 or 2, characterized in that said external member (1) has a polygonal, preferably hexagonal outer contour (4).

4. A screw nut assembly according to any one of claims 1 to 3, characterized in that the front section (9) of said inner nut means has a foremost portion (5) of constant inner dimensions in longitudinal section.

5. A screw nut assembly according to claim 4, characterized in that said cylindrical portion (5) is axially followed by a conical portion (6).

6. A screw nut assembly according to any one of claims 1 to 5, characterized in that the side edges (18) of the rear section (17) of said inner nut segments (2) are spaced apart in wedge-like manner in the forwardly pushed state of said external member (1).

7. A screw nut assembly according to any one of claims 1 to 6, characterized in that the outer contour of the rear section (17) of said inner nut segments (2) broaden radially in the forwardly pushed state of said external member (1) from the rear face thereof.

8. A screw nut assembly according to any one of claims 1 to 7, characterized in that the rear side edges (18) of said inner nut segments abut on each other over their whole length when said external member is (1) is pushed back.

9. A screw nut assembly according to any one of claims 1 to 8, characterized in that an outer annular groove (19) in which an annular tension spring means (20) is seated is formed in the rear end section of said inner nut segments (2).

10. A screw nut assembly according to any one of claims 1 to 9, characterized in that the associated side edges (12, 18) of said inner nut segments (2) have a toothing (13, 14, 16).

11. A screw nut assembly according to any one of claims 1 to 10, characterized in that said inner nut segments (2) are pivotable about a pivot means (16) which is formed by engagement of lateral projections (16) on edges into corresponding recesses of the associated edges.

12. A screw nut assembly according to claim 11, characterized in that said pivot means (16) is positioned in axial direction on the rear face (15) of said forwardly pushed external member.

13. A screw nut assembly according to any one of claims 1 to 12, characterized in that the axial length of said inner nut means is about twice the length of said external member (1).

14. A screw nut assembly according to any one of claims 1 to 13, characterized in that it can be produced in a casting process.

15. A screw nut assembly according to any one of claims 1 to 14, characterized in that in the unfolded state of said assembly a cylindrical inner space remains in the rear sections (17) of said inner nut segments (2) whose diameter is greater than that of the internal thread of the front sections (9) to such an extent that said screw nut assembly is seated in a freely movable manner on an associated external thread.

## Revendications

1. Montage d'écrou avec un élément extérieur fait d'une seule pièce (1) et un dispositif d'écrou intérieur composé de deux segments d'écrou intérieurs, l'élément extérieur (1) présentant une surface intérieure (5, 6) dont les dimensions intérieures s'étendent au minimum sur une partie (6) de son étendue axiale dans le sens de serrage du montage d'écrou et le dispositif d'écrou intérieur une longueur axiale supérieure à celle de l'élément extérieur (1), avec une section avant (9) dans le sens du serrage, section dans laquelle les segments d'écrou intérieurs (2) présentent, lorsque leurs arêtes latérales (12) sont disposées l'une contre l'autre, un filet femelle (11) cylindrique et un contour extérieur correspondant au contour intérieur du filetage mâle (1), de telle sorte que l'élément extérieur (1), essentiellement solidaire, peut être déplacé vers l'avant sur la section avant (9) des segments d'écrou intérieurs (2) et relié à ceux-ci, sans risque de torsion, à l'aide de moyens s'emboîtant l'un dans l'autre, et les arêtes latérales (18) de la section arrière des segments (2) étant espacées, lorsque l'élément extérieur (1) est déplacé vers l'avant, de telle manière que, lorsque l'élément extérieur (1) est ramené en arrière, les segments d'écrou intérieurs (2) pivotent et leurs arêtes latérales (18) se déplacent l'une vers l'autre, ce qui provoque un élargissement du filetage femelle (11),
**caractérisé en ce que**
un dispositif ressort (20) agit, radialement vers l'intérieur, sur les sections arrière (17) des segments d'écrou intérieurs (2), c'est-à-dire l'un sur l'autre, le dispositif ressort (20) dépassant radialement vers l'extérieur de telle façon que les segments d'écrou intérieurs (2) sont maintenus de manière imperdable dans l'élément extérieur (1).

2. Montage d'écrou selon la revendication n° 1, caractérisé en ce que l'élément extérieur (1) possède un contour intérieur multi-arêtes, de préférence à six arêtes (5, 6).

3. Montage d'écrou selon la revendication n° 1 ou 2, caractérisé en ce que l'élément extérieur (1) possède un contour extérieur multi-arêtes, de préférence à six arêtes (4).

4. Montage d'écrou selon l'une des revendications n° 1 à 3, caractérisé en ce que la section avant (9) du dispositif d'écrou intérieur présente, dans sa section longitudinale, une partie avant extrême (5) à dimensions intérieures constantes.

5. Montage d'écrou selon la revendications n° 4, caractérisé en ce que une partie conique (6) se rattache à la partie cylindrique (5).

6. Montage d'écrou selon l'une des revendications n° 1 à 5, caractérisé en ce que les arêtes latérales (18) de la section arrière (17) des segments d'écrou intérieurs (2) s'écartent l'un de l'autre en biais lorsque l'élément extérieur (1) est déplacé vers l'avant (1).

7. Montage d'écrou selon l'une des revendications n° 1 à 6, caractérisé en ce que le contour extérieur de la section arrière (17) des segments d'écrou intérieurs (2) s'élargit radialement lorsque l'élément extérieur (2) est déplacé vers l'avant et ce, à partir de sa face frontale arrière.

8. Montage d'écrou selon l'une des revendications n° 1 à 7, caractérisé en ce que, lorsque l'élément extérieur (1) est ramené en arrière, les arêtes latérales (18) arrière des segments d'écrou intérieurs (2) sont appliqués l'un contre l'autre sur toute leur longueur.

9. Montage d'écrou selon l'une des revendications n° 1 à 8, caractérisé en ce qu'une rainure annulaire extérieure (19) est prévue dans la section finale arrière des segments d'écrou intérieurs (2), rainure dans laquelle repose un dispositif annulaire à ressort de traction (20).

10. Montage d'écrou selon l'une des revendications n° 1 à 9, caractérisé en ce que les arêtes latérales associées (12, 18) des segments d'écrou intérieurs (2) présentent une denture (13, 14, 16).

11. Montage d'écrou selon l'une des revendications n° 1 à 10, caractérisé en ce que les segments d'écrou intérieurs (2) pivotent autour d'un dispositif orientable lequel est formé par l'engagement de saillies latérales (16), au niveau d'arêtes marginales, dans des évidements correspondants des arêtes marginales associées.

12. Montage d'écrou selon la revendication n° 11, caractérisé en ce que le dispositif pivotant (16) se trouve appliqué, dans le sens axial, contre la face frontale arrière (15) de l'élément extérieur déplacé vers l'avant.

13. Montage d'écrou selon l'une des revendications n° 1 à 12, caractérisé en ce que la longueur axiale du dispositif d'écrou intérieur est à peu près deux fois plus grande que celle de l'élément extérieur (1).

14. Montage d'écrou selon l'une des revendications n° 1 à 13, caractérisé en ce que celui-ci peut être réalisé par procédé de moulage en fonte.

15. Montage d'écrou selon l'une des revendications n° 1 à 14, caractérisé en ce que, lorsque le montage est relevé, un espace intérieur cylindrique demeure dans les sections arrière (17) des segments d'écrou intérieurs (2) dont le diamètre est aussi grand que celui du filetage femelle des sections avant (9), et en ce que le montage repose, tout en pouvant se déplacer librement, sur un filetage mâle associé.
